# EUROPEAN PATENT SPECIFICATION

(11) **EP 1 549 902 B1**
(45) Date of publication and mention of the grant of the patent: **28.11.2007**
(21) Application number: 02761692.9
(22) Date of filing: 17.09.2002
(51) Int. Cl.: G01B 3/10

(54) **RETRACTABLE TAPE MEASURE SUITABLE FOR USE IN ALL ORIENTATIONS**
EINROLLBARES MASSBAND ZUR BENUTZUNG IN ALLEN RICHTUNGEN
METRE A RUBAN ESCAMOTABLE APTE A ETRE UTILISE DANS TOUTES LES ORIENTATIONS

(43) Date of publication of application: 06.07.2005
(73) Proprietor: Odachowski, Mark, Ocean City, MD 21842 (US)
(72) Inventor: Odachowski, Mark, Ocean City, MD 21842 (US)
(74) Representative: Bugnion Genève
(86) International application number: PCT/US2002/029442
(87) International publication number: WO 2004/027344

(56) References cited:
- DE-A- 3 937 319
- US-A- 2 956 795
- US-A- 6 030 091
- US-A- 6 161 299

## Description

### BACKGROUND OF THE INVENTION

### 1. FIELD OF THE INVENTION

The present invention generally relates to geometrical instruments for measuring distance. More particularly, this invention relates to an improved retractable, tape measure.

### 2 DESCRIPTION OF THE RELATED ART

Retractable tape measures have been popular for many years and have often been the subject of patent grants. For example, see U.S. Patent Nos. 3,908,277, 4,153,996, 4,194,703,4,439,927,4,748,746,4,938,430, 5,210,956, 5,983,514, and 6,161,299.

In general, a retractable tape measure includes some widely recognized features. These include: a metal tape, whose cross-section has curvature, that is coiled and retractably mounted within a housing, a means for mounting the coiled tape within the housing while allowing its free end to extend through an opening in the housing, an end stop for preventing the free end of the tape from retracting into the housing, a bumper mechanism that helps to absorb the impact of the tape's free end with the housing, and a lock which releasably secures the tape in an extended position.

However, despite the public's general awareness of retractable tape measures, the applicant has discovered that these devices have some not-so-widely understood limitations. For example, retractable tape measures can only be effectively used in certain orientations - such as when their housings are held so that their extended tapes are oriented with the concave side of tape directed upward.

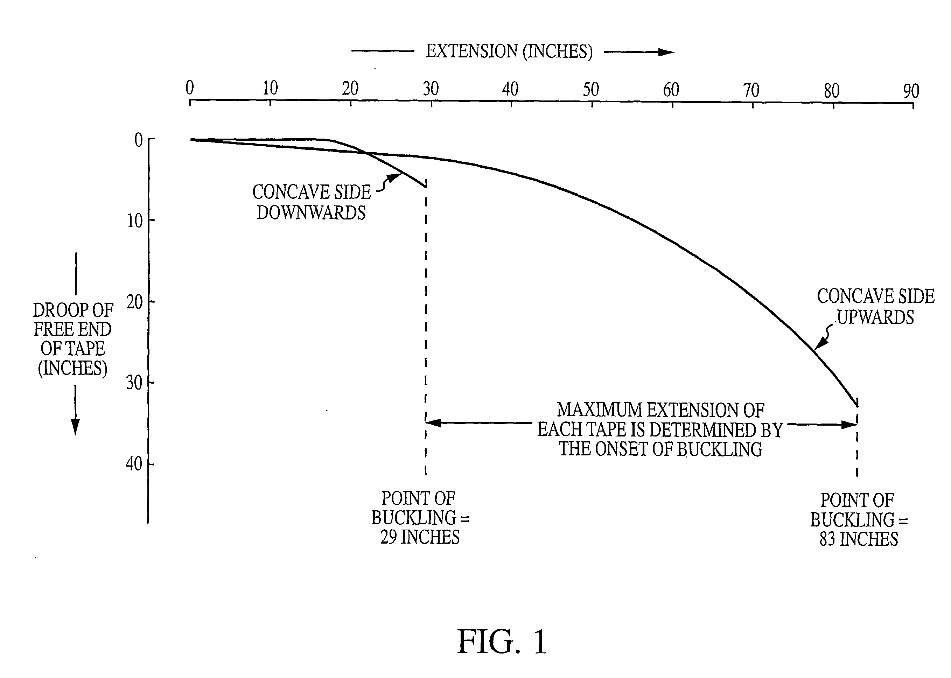

The reason for this situation is seen in FIG. 1 which shows the effects on the bending characteristics of a standard, one-inch wide, retractable tape measure when its concave side is directed upward (line 2) versus downward (line 1). FIG. 1 is a plot of the vertical droop of the tape's free end from a line that projects horizontally from the orifice of the tape's housing as a function of the free end of the tape's extended horizontal distance from its housing. The tape exhibits, to different degrees depending upon its orientation, the phenomena that, as it is extended, the tape's free end droops downward since the weight of the extended tape is only supported at the tape's housing. Beyond a certain maximum horizontal, extension distance, the tape can no longer support its weight and the extended tape buckles at its housing's orifice, with the free end of the tape falling downward so that it ends up effectively hanging vertically beneath the housing's orifice until it is retracted into the tape measure housing.

These bending test differences reveal that the tape with concave upward curvature exhibits superior resistance to buckling, i.e., the concave upward orientated tape measure can have its tape's free end extend to a much greater horizontal distance before buckling (i.e., 83 inches versus 29 inches) than when it's concave side is oriented downward.

It can be noted that these bending results for retractable tape measures, that utilize metal tapes whose edges turn upward or downward with respect to the tape's centerline (i.e., the boundary surfaces of the tape's cross-section exhibits curvature, with its top surface having either concave or convex curvature), are quite different from some of the early studies on coiled metal tapes with cross-sectional curvature. For example, see U.S. Patent No. 2,956,795 pertaining to coiled metal tapes or springs (i.e., the stresses imposed on the initially flat ribbons of metal that are used to make such coils apparently impart in them a natural tendency to resist being uncoiled; thus they can serve as springs) which discloses how the magnitude and direction (e.g., the concave side of the cross-section is either toward or away from the center of the coil) of such a tape's curvature can impact its resistance to be uncoiled so that such a coiled taped can effectively perform as a spring.

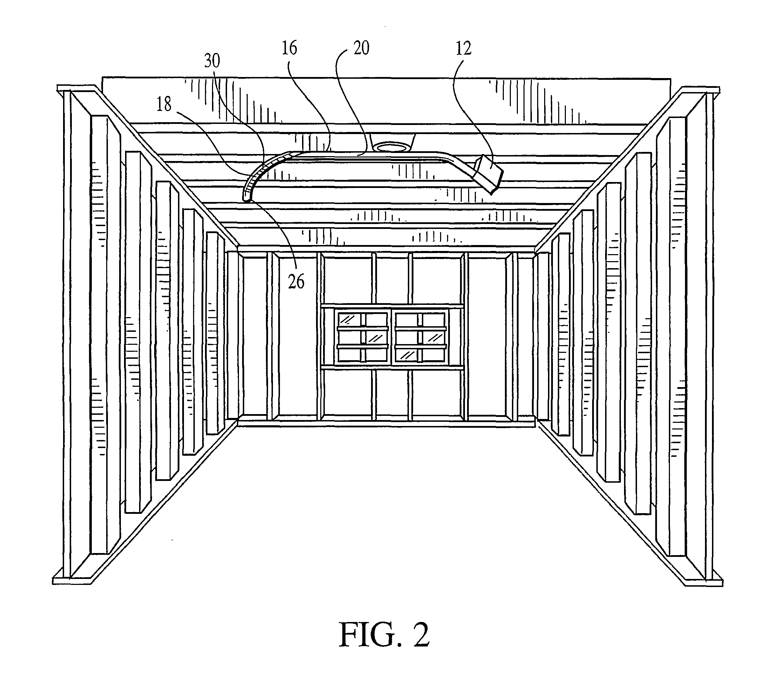

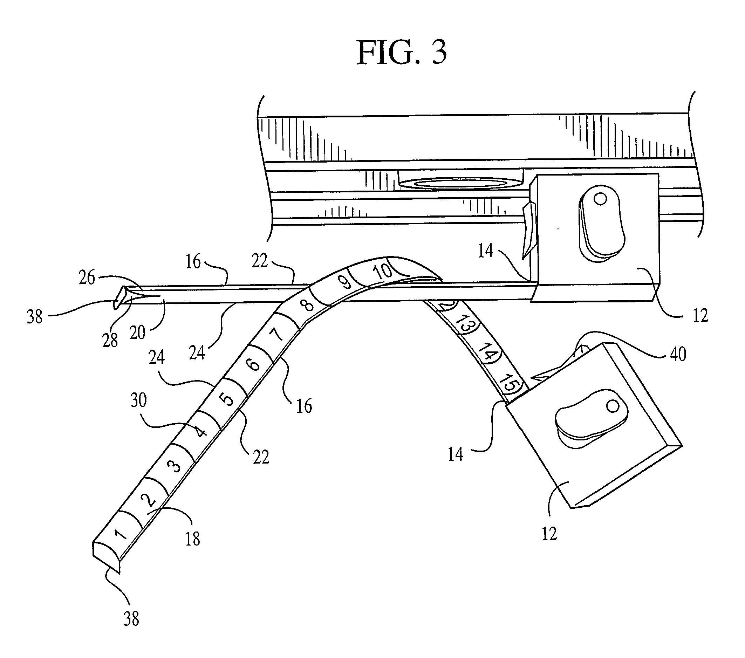

The applicant has discovered that this preferred method for orienting retractable tape measures and the general design of these devices (i.e., their retractable tapes always extend from their housings at a point near the bottom edge of the housing's front surface, and measurement indicia are found on only the top surface of the tape) leads to some situations in which these devices perform very poorly. For example, when trying to make measurements on a ceiling, the problem exists that a user must bend the tape downward so that the housing is out of the way of the ceiling as the portion of the tape near the housing is brought up to the ceiling. See FIGS. 2 and 3. Unfortunately, the stress loads on an extended tape are such that the extended end of the tape immediately drops downward under the force of gravity if the tape is sharply bent, thereby making it impossible to make the desired measurement on the ceiling. Furthermore, the measurement indicia on the top side of the tape cannot be seen by the user who is beneath the tape and extending it up to a ceiling.

There is one tape measure in the prior art (U.S. Patent No. 1,986,551 to Anderson) that discloses a retractable tape measure with measurement indicia on the tape's bottom surface. However, closer inspection of this tape measure reveals that it is unusual in that it is actually designed to be used with in the unusual orientation of having the tape's concave side directed downward, since it is for making "inside and outside direct reading measurements," with the cross-sectional curvature of this tape being turned downward "so as to obtain direct close readings on the object measured." Thus, this tape actually is meant for measuring on the tops of objects where the tape's downward turned edges are in closer proximity to the top of the object and can give a more accurate reading. Additionally, the applicant has found that the Anderson tape measure's unique design (i.e., with the housing opening being on the rear face on the housing and with guide shoes being used to hold the tape prior to it being extended from the housing) puts end constraints on an extended tape that are detrimental to the tape's ability to resist being bent downward by gravity when the tape measure is turned over and used in an orientation that is rotated 180 degrees from its intended orientation for use.

Thus, despite this prior art, one finds that standard, tape measures are not always user friendly. The need exists for an improved, retractable tape measure that is easier to use in all orientations.

### 3. OBJECTS AND ADVANTAGES

There has been summarized above, rather broadly, the prior art that is related to the present invention in order that the context of the present invention may be better understood and appreciated. In this regard, it is instructive to also consider the objects and advantages of the present invention.

An object of the present invention is to provide an improved, retractable tape measure that will overcome user problems such as the one described above.

Another object of the present invention is to provide an improved, retractable tape measure that can be used, for measuring extended distances, just as easily when those distances are on a ceiling or a floor. The above-mentioned object can be attained by an apparatus and a method according to the independent Claims 1 and 5. Preferred embodiments are subject of the dependent claims 2 to 4 and 6 to 8.

Other objects and advantages of the present invention will become readily apparent as the invention is better understood by reference to the accompanying drawings and the detailed description that follows.

### SUMMARY OF THE INVENTION

The present invention is generally directed to satisfying the need set forth above and the problems identified with prior retractable, tape measures.

This present invention is an improved, retractable tape measure. It is an improvement of the standard retractable tape measure which has a housing with an opening through which is extended and retracted a measuring tape which has a top and bottom surface, turned-up edges, a free end and top measurement indicia inscribed on the top surface of the tape. Such a tape is seen to be improved by the inclusion of bottom measurement indicia on the bottom surface of the tape, and locating the housing opening in the front portion and proximate the top portion of the housing so that, when the tape measure is being used to measure against an overhead surface, the portion of the tape that is extending through the opening and in closest proximity to the housing can be held in close proximity to the overhead surface without having to bend the tape to move the housing away from the overhead surface.

These improvements are significant in that they greatly enhance the usefulness of such a tape measure, especially for measuring overhead distances.

Other embodiments of the present invention will become readily apparent as the invention is better understood by reference to the accompanying drawings and the detailed description that follows.

### BRIEF DESCRIPTION OF THE DRAWINGS

FIG. 1 shows the effects on the bending characteristics of a standard, retractable tape measure when its concave side is directed upward or downward.
FIG. 2 is a perspective view of a standard, retractable tape measure as it is being used to make a measurement beneath a ceiling.
FIG. 3 is a perspective view of a standard tape measure showing some of the problems that can be encountered in using such a tape measure.
FIG. 4 is a perspective view of an embodiment of the present invention when viewed from below.
FIG. 5 is a perspective view of an embodiment of the present invention when viewed from above.
FIG. 6 is a side view of an embodiment of the present invention showing its front-portion-located lock mechanism and cooperating top bumper mechanism.
FIG. 7 a front view of an embodiment of the present invention showing the complimentary nature of the top bumper's cross-sectional convex, downward-directed curvature and its interaction with the upward, concave curvature of the tape.
FIG. 8 a side view of another embodiment of the present invention showing a top-portion-located lock mechanism.
FIG. 9 is a perspective view of an embodiment of the present invention being used to make the same measurement previously shown in FIG. 1
FIG. 10 is a perspective view of an embodiment of the present invention shown in (a) in its upright position so that the tape's edges are turned upward against gravity, and in (b) when it has been turned over to get the housing out of the way when a measurement is being made on a floor.

### DESCRIPTION OF THE PREFERRED EMBODIMENT

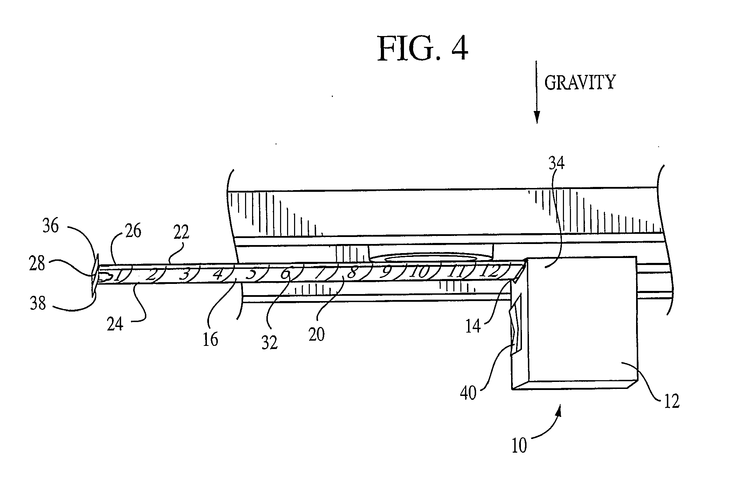

Referring now to the drawings wherein are shown preferred embodiments and wherein like reference numerals designate like elements throughout, there is shown in FIG. 4 a perspective view of an embodiment of the present invention in the form of an improved retractable, tape measure (10).

This embodiment includes a housing (12) having a tape opening (14), a retractable measuring tape (16) with top (18) and bottom (20) surfaces, edges (22, 24) that turn upward so as to stiffen the tape (16) from being bent downward by the force of gravity, and a free end (26) that extends through the opening (14). This embodiment further includes a lock mechanism (40), a bumper mechanism (80), an end stop (28) that is mounted on the tape's free end (26), and top measurement indicia (30) that are inscribed on the top surface (18) of the measuring tape (16).

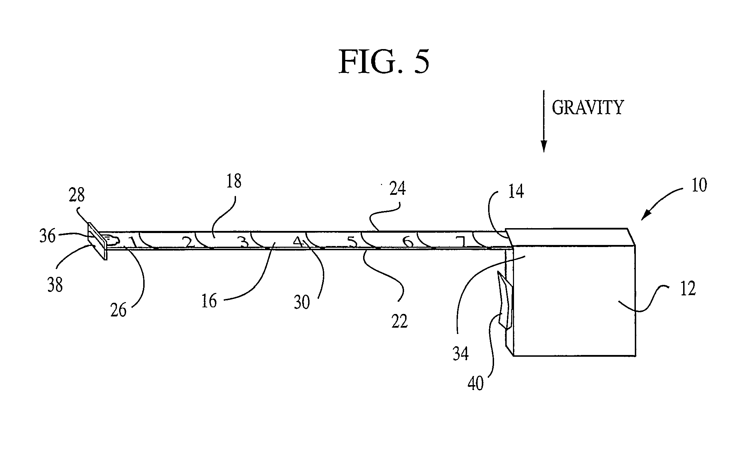

Similar to prior retractable tape measures, FIGS. 4 and 5 reveal that the tape opening is in the front portion of the tape's housing. However, contrary to prior retractable tape measures, this opening is seen to be proximate the housing's top portion and not its bottom edge. Additionally, this embodiment is seen to be have been improved by the inclusion of bottom measurement indicia (32) on the bottom surface (20) of the measuring tape (16).

The advantage of this configuration is that in using the tape measure (10) to measure against an overhead surface with its edges (22, 24) being held adjacent the surface, the portion of the tape (16), that extends through the opening (14) and is in closest proximity to the housing (12), can be held in close proximity to the overhead surface without having to bend the tape (16) to move the housing (12) away from the overhead surface.

The tape's housing (12) is formed of two half casing elements (12a, 12b) that are secured together by screws in a known manner. The two halves of the casing define a front portion (33) and a top portion (34).

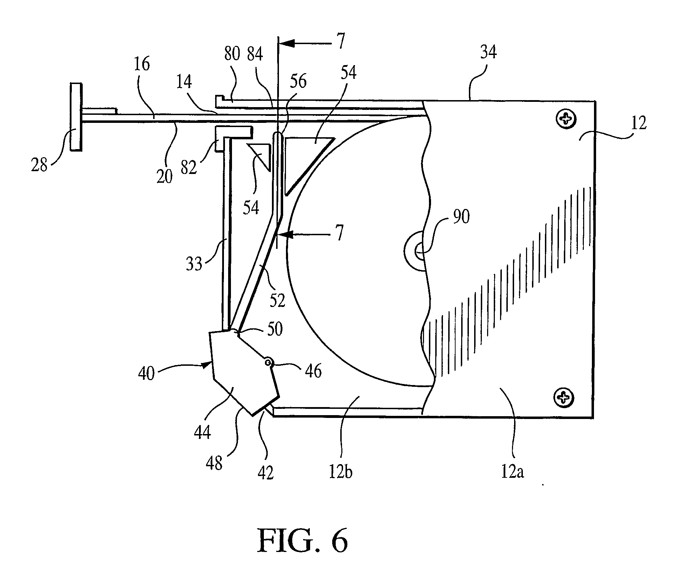

In order to lock the tape (16) in an extended position, a tape lock mechanism (40) is preferably located in either the housing's front or top portions. With a front portion location, the lock mechanism, shown in FIG. 6, includes an actuator (44) and a slide plate (52). The actuator is pivotly mounted on a post (46) between the casing halves (12a, 12b). The actuator has an exposed surface (48) which protrudes through an actuator opening (42) in the housing's front portion. Pressure on this surface (48) by a tape user moves the actuator (44) between a first position (the unlocked position) and a second position (the locked position).

The actuator (44) includes a hook member (50) that engages the slide plate (52) and applies a force that causes it to slide up (to lock) and down (to unlock) within a path defined by extensions (54) extending inwardly from the respective halves of the housing (12). Upon the application of an upward force on the actuator's exposed surface (48), the slide plate's free end (56) moves upward along its defined path to engage the tape's bottom surface (20).

In order to cushion the impact of tape's end stop (28) against the edges of the tape opening (14) upon retraction of the tape (16), a top (80) and a bottom (82) bumper mechanism are provided at the edges of the tape opening (14). In a preferred embodiment, these bumper mechanisms consist of a one-piece construction and are formed from a resilient material which can absorb the impact of the tape's end stop (28).

FIG. 6 reveals that the top bumper mechanism (80) and the lock mechanism's slide plate work cooperatively. When the slide plate's free end (56) moves sufficiently far upward, it engages the tape's bottom surface (20) and presses it against a contact portion (84) of the top bumper mechanism (80) so as to pinch a portion of the tape (16) to lock it at a desired extended position. Upon the application of a downward force on the actuator's exposed surface, the slide plate's free end (56) moves downward so as to unlock the tape (16).

Since the contact portion (84) of the top bumper mechanism is near the edges of the housing's tape opening (14), the tape still retains its concave upward, cross-sectional shape at this point, as it has not yet begun to be coiled about its central hub (90) so as to flatten the tape's upward-turned edges.

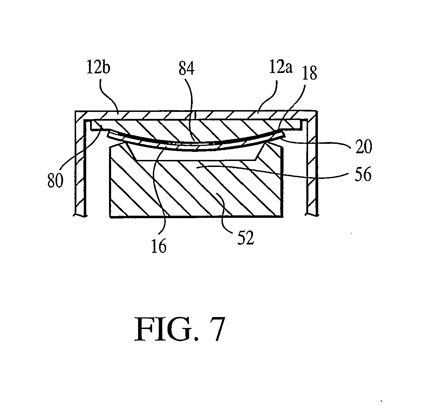

In order to allow for the maximum, unbending extension of the tape's free end (26) from its housing (12), it is important that its lock mechanism not apply any forces on the tape's edges (22, 24) which cause them to be turned downward. In a preferred embodiment, this is accomplished by configuring the top bumper's contact portion (84) so that it has a convex, downward-directed curvature which is equivalent and complimentary to that of the original, upward concave curvature of the tape (16). See FIG. 7.

In describing this locking mechanism it should be recognized that many different mechanical motions and locations for it are possible. For example, rather than the actuator having a pivoting motion, it could alternatively have a sliding motion along the housing's surface.

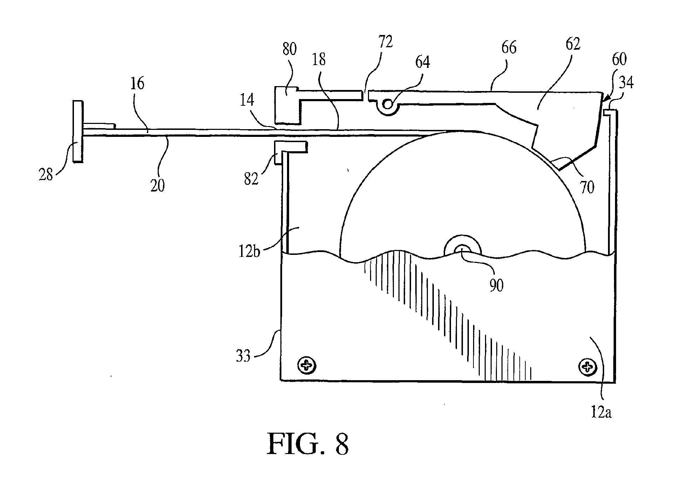

Similarly, the lock mechanism can be located on other portions of the housing. For example, a top, tape lock mechanism (60) can be provided. See FIG. 8. This mechanism includes an actuator (62), the exposed surface (66) of which extends thorough an actuator opening (72) in the housing's top portion (34). This actuator is pivotly mounted on a post (64) between the casing halves (12a, 12b). Upon the application of a downward force on the actuator's exposed surface, the actuator's contact member (70) moves downward so as engage and press against the tape's top surface (18) at a point where the tape has already begun to be coiled about its central hub and where the tape's edges (22, 24) have been turned downward and the tape's cross-section flattened. Since the operation of this type of lock depends upon the tape having been flattened, it can be noted that this sort of top, tape locking mechanism could just as well be employed to lock the tape by applying it to other potions of the housing, such as the back and bottom portions of the housing.

The measuring tape (16) is coiled within the housing (12) about a hub (90) and its inner end (27) is secured to the hub in any convenient manner. A coiled spring is located within the hub and is connected to a central shaft of the housing (12). This coiled spring operates in the known manner to automatically retract the tape (16) into the housing (12). Because this mechanism is known, it is not described herein in detail.

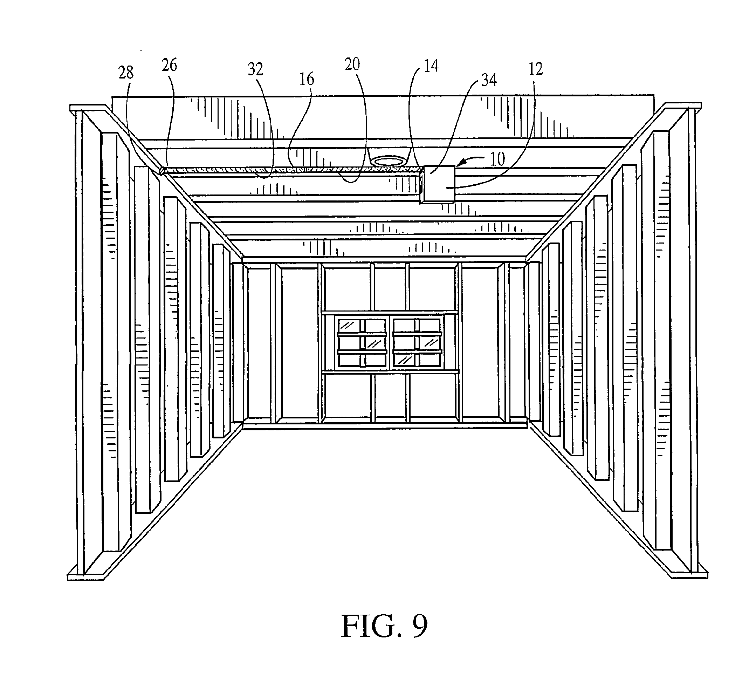

The advantages of the present invention for making measurements against overhead surfaces are further seen in FIG. 9 which shows the present invention being used to make the same measurement previously shown in FIG. 2 and 3. The addition of bottom measurement indicia (32) on the bottom surface (20) of the tape (1) are seen to eliminate the previous need to bend the tape downward and away from the ceiling to allow the numbers (30) to be read on the top surface (18) of the tape (16). Also, the location of the housing opening (14) in the top portion (34) of the housing eliminates the need to move the bulk of the housing (12) downward and away from the ceiling.

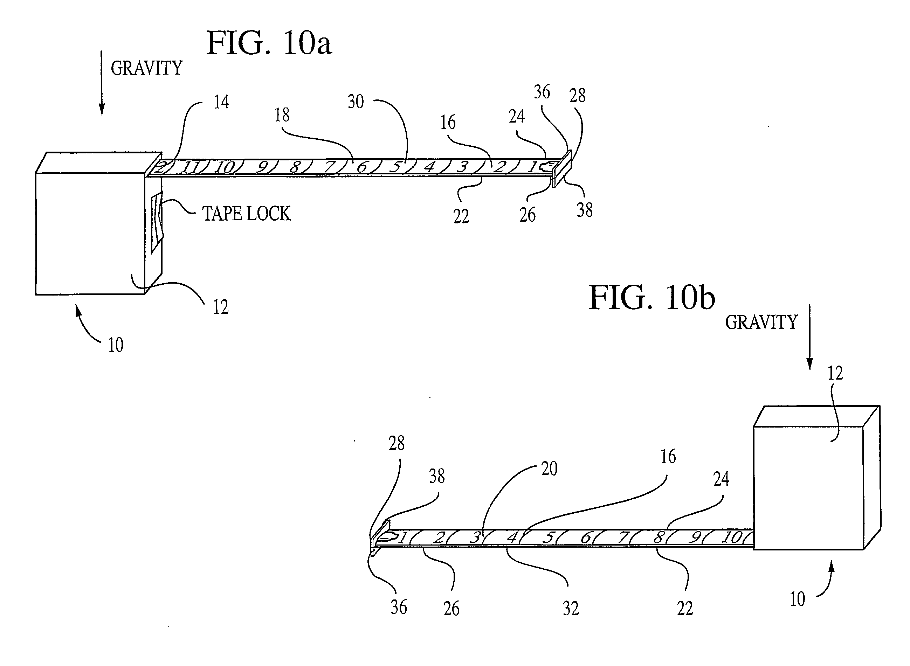

This embodiment of the present invention is also seen to be as easy to use as a standard tape measure when making measurement on a floor. For such measurements, the present invention is just rotated 180 degrees so as to allow the top portion (34) of the housing (12) to be placed directly on the floor. As shown in FIG. 10(b), the tape's edges (22, 24) now point toward the floor and thus no longer aid in stiffening the extended length of the tape (16). However, this is not a problem, since the top surface (18) of the tape (16) can actually lie against the floor.

Furthermore, because the tape of the present invention is made to be rotated 180 degrees and used, the tape's end stop (28) is configured so that it has upper (36) and lower (38) fingers that extend, respectively, above and below the tape's top (18) and bottom (20) surfaces. Thus, when such a tape (10) is rotated, the end stop (28) can still easily be hooked onto a protuberance or slot in a floor so as to locate or tie-down the free end (26) of the tape in order to make a specific measurement on the floor. See FIG. 10(a).

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the scope of the appended claims.

## Claims

1. A retractable tape measure (10) having:
a housing (12) having a tape opening (14), a top (34) portion and a front (33) portion,
a retractable measuring tape (16) positioned within said housing (12) and having a top (18) and a bottom (20) surface, edges (22,24) that turn so as to provide the cross-section of said tape (16) with curvature along substantially an entire length of said tape (16) when in use, and a free end (26) that extends through said opening (14),
an end stop (28) mounted on said free end (26), said end stop (28) being configured so as to be engageable with said opening (14) of said housing when the tape (16) is retracted,
top (30) measurement indicia inscribed on the top surface (18) of said measuring tape,
said housing top portion (34) having a portion for contacting a surface on an object to be measured,
said tape edges (22,24) when in use being turned in a direction toward said housing portion for contacting the surface of the object to be measured,
wherein said tape opening (14) being in close proximity to said housing top portion (34) so that when said tape measure (10) is being used to measure against an overhead surface, with said edges (22,24) being in close proximity to said overhead surface, the portion of said tape extending through said opening (14) which is in close proximity to said housing (12) is positionable in close proximity to said overhead surface without having to bend said tape (16) to move said housing (12) away from said overhead surface,
bottom measurement indicia (32) inscribed on the bottom (20) surface of said measuring tape,
the magnitude of said tape cross-sectional curvature being such as to stiffen said tape (16) from being bent by the force of gravity,
said end stop (28) being configured so as to maintain the turn of said edges of said tape at said free end (26) in said direction toward said housing portion for contacting a surface of the object to be measured, and
wherein said end stop having an upper finger (36) that extends above said top surface and a lower finger (38) that extends below said bottom surface.

2. An improved retractable tape measure as recited in Claim 1, further comprising a lock mechanism (40) connected to said housing (12) for locking said tape (16) against movement into and out of said housing (12).

3. An improved retractable tape measure as recited in Claim 1 or 2, further comprising a bumper mechanism (80) affixed to an edge of said tape opening (14) and configured so as to cushion the impact of said end stop (28) when said tape free end (26) is retracted into said housing.

4. An improved retractable tape measure as recited in Claim 3, wherein said bumper mechanism (80) is further configured to preserve said tape cross-sectional curvature when said lock mechanism (40) acts on said tape (16).

5. A method of constructing a retractable tape measure (10) having the steps of:
using a housing (12) having a tape opening (14), a top (34) portion and a front (33) portion,
using a retractable measuring tape (16) positioned within said housing (12) and having a top (18) and a bottom (20) surface, edges (22,24) that turn so as to provide the cross-section of said tape (16) with curvature along substantially an entire length of said tape (16) when in use, and a free end (26) that extends through said opening (14),
using an end stop (28) mounted on said free end (26), said end stop (28) being configured so as to be engageable with said opening (14) of said housing when the tape (16) is retracted,
using top (30) measurement indicia inscribed on the top surface (18) of said measuring tape,
configuring said housing top portion (34) to have a portion for contacting a surface on an object to be measured,
configuring said tape edges (22,24) when in use so as to turn in a direction toward said housing portion for contacting the surface of the object to be measured,
positioning said tape opening (14) in close proximity to said housing top portion (34) so that when said tape measure (10) is being used to measure against an overhead surface, with said edges (22,24) being in close proximity to said overhead surface, the portion of said tape extending through said opening (14) which is in close proximity to said housing (12) is positionable in close proximity to said overhead surface without having to bend said tape (16) to move said housing (12) away from said overhead surface,
using bottom measurement indicia (32) inscribed on the bottom (20) surface of said measuring tape,
setting the magnitude of said tape cross-sectional curvature so as to stiffen said tape (16) from being bent by the force of gravity,
configuring said end stop (28) so as to maintain the turn of said edges of said tape at said free end (26) in said direction toward said housing portion for contacting a surface of the object to be measured, and
configuring said end stop to have an upper finger (36) that extends above said top surface and a lower finger (38) that extends below said bottom surface.

6. An improved method as recited in Claim 5, further comprising the step of using a lock mechanism (40) connected to said housing (12) for locking said tape (16) against movement into and out of said housing (12).

7. An improved method as recited in Claim 5 or 6, further comprising the step of using a bumper mechanism (80) affixed to an edge of said tape opening (14) and configuring said bumper mechanism so as to cushion the impact of said end stop (28) when said tape free end (26) is retracted into said housing.

8. An improved method as recited in Claim 7, further comprising the step of configuring said bumper mechanism (80) to preserve said tape cross-sectional curvature when said lock mechanism (40) acts on said tape (16).

## Patentansprüche

1. Einziehbares Bandmass (10), enthaltend:
- ein Gehäuse (12) mit einer Messbandöffnung (14), einem oberen Teil (34) und einem stirnseitigen Teil (33),
- ein einziehbares Messband (16), das sich im genannten Gehäuse (12) befindet und eine obere (18) und eine untere Oberfläche (20) besitzt sowie Ränder (22, 24) aufweist, die derart gebogen sind, dass der Querschnitt des genannten Bandes (16) praktisch über die ganze Länge des Bandes (16) eine gekrümmte Form annimmt, wenn das Band in Gebrauch ist, und das Band ein freies Ende (26) besitzt, das sich durch die genannte Öffnung (14) hindurch erstreckt,
- einen Endanschlag (28), welcher am genannten freien Ende (26) angebracht ist, wobei dieser Endanschlag (28) derart ausgebildet ist, dass er in die genannte Öffnung (14) im genannten Gehäuse eingreifen kann, wenn das Band (16) eingezogen ist,
- auf der Oberseite (18) des genannten Messbandes angebrachte obere Messmarkierungen (30),
wobei der obere Teil (34) des Gehäuses einen Bereich zum Anlegen an eine Fläche eines Messobjektes aufweist,
wobei die genannten Ränder (22, 24) des Bandes bei dessen Gebrauch in einer Richtung gekrümmt sind, die nach dem genannten Bereich des Gehäuses zum Anlegen an eine Fläche eines Messobjektes zeigt, und
wobei die genannte Öffnung (14) für das Band in unmittelbarer Nähe zum genannten oberen Teil (34) des Gehäuses angebracht ist, so dass beim Gebrauch des Messbandes (10) für eine Messung einer über Kopf befindlichen Fläche, wobei die genannten Ränder (22, 24) nahe an dieser über Kopf befindlichen Fläche liegen, derjenige Abschnitt des genannten Bandes, der sich durch die genannte Öffnung (14) erstreckt und der nahe am genannten Gehäuse (12) liegt, in unmittelbarer Nähe der genannten über Kopf befindlichen Fläche positioniert werden kann, ohne dass das genannte Band (16) zu knicken ist, um das genannte Gehäuse (12) von der über Kopf befindlichen Fläche zu entfernen,
- auf der Unterseite (20) des genannten Messbandes angebrachte untere Messmarkierungen (32),
wobei der Betrag der genannten Krümmung des Bandes über den Querschnitt derart gewählt ist, dass das genannte Band (16) versteift wird, so dass es gegen ein Knicken durch die Schwerkraft geschützt ist,
wobei der genannte Endanschlag (28) so ausgebildet ist, dass die Wölbung der genannten Ränder des genannten Bandes am genannten freien Ende (26) in der genannten Richtung auf den genannten Bereich des Gehäuses, der zur Berührung einer Oberfläche des Messobjekts bestimmt ist, beibehalten wird, und
wobei der genannte Endanschlag einen oberen Finger (36), der sich von der genannten oberen Fläche nach oben erstreckt, und einen unteren Finger (38) aufweist, der sich von der genannten unteren Fläche nach unten erstreckt.

2. Verbessertes einziehbares Bandmass nach Anspruch 1, welches weiterhin einen Verriegelungsmechanismus (40) enthält, der mit dem genannten Gehäuse (12) verbunden ist, um das genannte Band (16) gegen eine Bewegung in das Gehäuse und aus dem Gehäuse (12) zu blockieren.

3. Verbessertes einziehbares Bandmass nach Anspruch 1 oder 2, welches zusätzlich einen Puffermechanismus (80) aufweist, welcher an einem Rand der genannten Öffnung (14) für das Band angebracht ist und so ausgebildet ist, dass er den Aufschlag des Endanschlags (28) dämpft, wenn das genannte freie Ende (26) des Bandes in das genannte Gehäuse eingezogen wird.

4. Verbessertes einziehbares Bandmass nach Anspruch 3, bei dem der genannte Puffermechanismus (80) weiterhin so ausgestaltet ist, dass er die genannte Krümmung des Bandes im Querschnitt aufrecht erhält, wenn der genannte Verriegelungsmechanismus (40) auf das genannte Band (16) einwirkt.

5. Verfahren zur Herstellung eines einziehbaren Bandmasses (10), welches die folgenden Schritte aufweist:
Verwendung eines Gehäuses (12) mit einer Bandöffnung (14), einem oberen Teil (34) und einem stirnseitigen Teil (33),
Verwendung eines einziehbaren Messbandes (16), das sich im genannten Gehäuse (12) befindet und eine obere (18) und eine untere Oberfläche (20) besitzt, sowie Ränder (22, 24), die derart gebogen sind, dass der Querschnitt des genannten Bandes (16) praktisch über die ganze Länge des Bandes (16) eine gekrümmte Form aufweist, wenn das Band in Gebrauch ist, und das Band ein freies Ende (26) besitzt, das sich durch die genannte Öffnung (14) hindurch erstreckt,
Verwendung eines Endanschlags (28), welcher am genannten freien Ende (26) angebracht ist, wobei dieser Endanschlag (28) derart ausgebildet ist, dass er in die genannte Öffnung (14) im genannten Gehäuse eingreifen kann, wenn das Band (16) eingezogen ist,
Verwendung von oberen Messmarkierungen (30), die auf der Oberseite (18) des genannten Messbandes angebracht sind,
Ausgestaltung des oberen Teils (34) des Gehäuses, derart, dass dieses einen Bereich zum Anlegen an eine Fläche eines Messobjektes aufweist,
Ausbildung der genannten Ränder (22, 24) des Bandes, derart, dass die Ränder beim Gebrauch des Bandes in einer Richtung gekrümmt sind, die nach dem genannten Bereich des Gehäuses zum Anlegen an eine Fläche eines Messobjektes zeigt,
Positionierung der genannten Öffnung (14) für das Band in unmittelbarer Nähe zum genannten oberen Teil (34) des Gehäuses, so dass beim Gebrauch des Messbandes (10) für eine Messung einer über Kopf befindlichen Fläche, wobei die genannten Ränder (22, 24) nahe an dieser über Kopf befindlichen Fläche liegen, derjenige Abschnitt des genannten Bandes, der sich durch die genannte Öffnung (14) hindurch erstreckt und der nahe am genannten Gehäuse (12) liegt, in unmittelbarer Nähe der genannten über Kopf befindlichen Fläche positioniert werden kann, ohne dass das genannte Band (16) geknickt werden muss, um das genannte Gehäuse (12) von der über Kopf befindlichen Fläche zu entfernen,
Verwendung von unteren Messmarkierungen (32), die auf der Unterseite (20) des genannten Messbandes angebracht sind,
Einstellung des Betrages der genannten Krümmung des Bandes über den Querschnitt, derart, dass das genannte Band (16) versteift wird, so dass es gegen ein Knicken durch die Schwerkraft geschützt ist,
Ausbildung des genannten Endanschlages (28) derart, dass die Wölbung der genannten Ränder des genannten Bandes am freien Ende (26) in der genannten Richtung auf den genannten Bereich des Gehäuses zwecks Berührung einer Oberfläche des Messobjektes beibehalten wird, und
Konfiguration des genannten Endanschlages derart, dass er einen oberen Finger (36), der sich von der genannten Oberfläche nach oben erstreckt, und einen unteren Finger (38) aufweist, der sich von der genannten unteren Fläche nach unten erstreckt.

6. Verbessertes Verfahren gemäss Anspruch 5, welches als weiteren Schritt die Verwendung eines Sperrmechanismus (40) aufweist, der mit dem genannten Gehäuse (12) verbunden ist und das genannte Band (16) gegen eine Bewegung in das Innere und aus dem Inneren des genannten Gehäuses (12) blockiert.

7. Verbessertes Verfahren nach Anspruch 5 oder 6, welches als weiteren Schritt die Verwendung eines Puffermechanismus (80) aufweist, der an einen Rand der genannten Öffnung (14) für das Band angebracht ist, wobei dieser Puffermechanismus derart konfiguriert wird, dass er den Aufschlag des genannten Endanschlags (28) dämpft, wenn das genannte freie Ende (26) des Bandes in das genannte Gehäuse eingezogen wird.

8. Verbessertes Verfahren nach Anspruch 7, welches als weiteren Schritt die Ausbildung des genannten Puffermechanismus (80) derart aufweist, dass die genannte Krümmung des Bandes über seinen Querschnitt beibehalten wird, wenn der genannte Sperrmechanismus (40) auf das genannte Band (16) einwirkt.

## Revendications

1. Mètre à ruban escamotable (10), comprenant :
- un boîtier (12) comportant une ouverture (14) pour le ruban, une partie de dessus (34) et une partie frontale (33),
- un ruban de mesure escamotable (16) positionné dans ledit boîtier (12) et présentant une surface de dessus (18) et une surface de dessous (20), et des bords (22, 24) qui sont recourbés de manière à fournir une courbure à la section transversale du ruban (16) le long pratiquement de toute la longueur dudit ruban (16) lorsqu'il est utilisé, et une extrémité libre (26) qui s'étend à travers ladite ouverture (14),
- une butée terminale (28) montée sur ladite extrémité libre (26), cette butée terminale (28) étant configurée de telle sorte qu'elle peut s'engager dans ladite ouverture (14) dudit boîtier lorsque le ruban (16) est rentré,
- des indices de mesure supérieurs (30) inscrits sur la surface de dessus (18) dudit ruban de mesure,
ladite partie de dessus du boîtier (34) présentant une zone destinée à venir en contact avec une surface d'un objet à mesurer,
lesdits bords (22, 24) du ruban étant recourbés, lorsque le ruban est utilisé, dans une direction vers ladite partie du boîtier pour venir en contact avec la surface de l'objet à mesurer,
dans lequel ladite ouverture (14) pour le ruban est située à proximité immédiate de ladite partie de dessus du boîtier (34) de sorte que, lorsque ledit mètre à ruban (10) est utilisé contre une surface au-dessus de la tête, lesdits bords (22, 24) étant à proximité immédiate de ladite surface au-dessus de la tête, la partie du ruban qui s'étend à travers ladite ouverture (14) et qui est à proximité immédiate dudit boîtier (12), est apte à être positionnée à proximité immédiate de ladite surface au-dessus de la tête sans qu'il soit nécessaire de plier ledit ruban (16) afin de pouvoir éloigner ledit boîtier (12) de ladite surface au-dessus de la tête,
- des indices de mesure inférieurs (32) inscrits sur la surface de dessous (20) dudit ruban de mesure,
le montant de ladite courbure transversale dudit ruban étant tel que ledit ruban (16) soit rigidifié afin de ne pas être plié par la force de la pesanteur,
ladite butée terminale (28) étant configurée telle qu'elle maintient le bombage desdits bords dudit ruban à ladite extrémité libre (26) dans ladite direction vers ladite partie du boîtier afin de venir en contact avec une surface de l'objet à mesurer, et
dans lequel ladite butée terminale comporte un doigt supérieur (36) qui s'étend au-dessus de ladite surface de dessus, et un doigt inférieur (38) qui s'étend au-dessous de ladite surface de dessous.

2. Mètre à ruban escamotable perfectionné selon la revendication 1, comprenant en plus un mécanisme de verrouillage (40) relié audit boîtier (12) afin de verrouiller ledit ruban (16) contre un mouvement vers l'intérieur ou vers l'extérieur dudit boîtier (12).

3. Mètre à ruban escamotable perfectionné selon la revendication 1 ou 2, comprenant en plus un mécanisme de tampon (80) fixé sur un bord de ladite ouverture (14) et configuré pour amortir l'impact de ladite butée terminale (28) lorsque l'extrémité libre dudit ruban (26) rentre dans ledit boîtier.

4. Mètre à ruban escamotable perfectionné selon la revendication 3, dans lequel ledit mécanisme de tampon (80) est encore configuré pour maintenir ladite courbure de la section transversale dudit ruban lorsque ledit mécanisme de verrouillage (40) agit sur ledit ruban (16).

5. Procédé pour construire un mètre à ruban escamotable (10), ce procédé comprenant les étapes suivantes :
- d'utiliser un boîtier (12) présentant une ouverture pour le ruban (14), une partie de dessus (34) et une partie frontale (33),
- d'utiliser un ruban de mesure escamotable (16) positionné dans ledit boîtier (12) et présentant une surface de dessus (18) et une surface de dessous (20), et des bords (22, 24) qui sont recourbés de manière à fournir une courbure à la section transversale du ruban (16) pratiquement le long de toute la longueur dudit ruban (16) lorsqu'il est utilisé, et une extrémité libre (26) qui s'étend à travers ladite ouverture (14),
- d'utiliser une butée terminale (28) montée sur ladite extrémité libre (26), cette butée terminale (28) étant configurée de telle sorte qu'elle peut s'engager dans ladite ouverture (14) dudit boîtier lorsque le ruban (16) est rentré,
- d'utiliser des indices de mesure supérieurs (30) inscrits sur la surface de dessus (18) dudit ruban de mesure,
- de configurer ladite partie de dessus du boîtier (34) de manière à présenter une zone destinée à venir en contact avec une surface d'un objet à mesurer,
- de configurer lesdits bords (22, 24) du ruban, lorsqu'il est utilisé, de manière à se recourber dans une direction vers ladite partie du boîtier qui est destinée à venir en contact avec la surface d'un objet à mesurer,
- de positionner ladite ouverture (14) pour le ruban à proximité immédiate de ladite partie de dessus du boîtier (34) de sorte que, lorsque ledit mètre à ruban (10) est utilisé contre une surface au-dessus de la tête, lesdits bords (22, 24) étant à proximité immédiate de ladite surface au-dessus de la tête, la partie du ruban qui s'étend à travers ladite ouverture (14) et qui est à proximité immédiate dudit boîtier (12) soit apte à être positionnée à proximité immédiate de ladite surface au-dessus de la tête sans qu'il soit nécessaire de plier ledit ruban (16) afin de pouvoir éloigner ledit boîtier (12) de ladite surface au-dessus de la tête,
- d'utiliser des indices de mesure inférieurs (32) inscrits sur la surface de dessous (20) dudit ruban de mesure,
- de choisir le montant de ladite courbure transversale dudit ruban tel que ledit ruban (16) soit rigidifié afin de ne pas être plié par la force de la pesanteur,
- de configurer ladite butée terminale (28) de telle façon qu'elle maintient le bombage desdits bords dudit ruban à ladite extrémité libre (26) dans ladite direction vers ladite partie du boîtier destinée à venir en contact avec une surface de l'objet à mesurer, et
- de configurer ladite butée terminale de façon à ce qu'elle comporte un doigt supérieur (36) qui s'étend au-dessus de ladite surface de dessus, et un doigt inférieur (38) qui s'étend au-dessous de ladite surface de dessous.

6. Procédé perfectionné selon la revendication 5, comprenant en plus l'étape d'utiliser un mécanisme de verrouillage (40) relié audit boîtier (12) afin de verrouiller ledit ruban (16) contre un mouvement vers l'intérieur et vers l'extérieur dudit boîtier (12).

7. Procédé perfectionné selon la revendication 5 ou 6, comprenant en plus l'étape d'utiliser un mécanisme de tampon (80) fixé à un bord de ladite ouverture pour le ruban (14) et de configurer ledit mécanisme de tampon afin d'amortir l'impact de ladite butée terminale (28) lorsque ladite extrémité libre (26) du ruban rentre dans ledit boîtier.

8. Procédé perfectionné selon la revendication 7, comprenant en plus l'étape de configurer ledit mécanisme de tampon (80) de façon à maintenir ladite courbure de la section transversale du ruban lorsque ledit mécanisme de verrouillage (40) agit sur ledit ruban (16).
